# EUROPÄISCHE PATENTANMELDUNG

(11) **EP 1 462 588 A2**
(43) Veröffentlichungstag der Anmeldung: **29.09.2004**
(21) Anmeldenummer: 04005513.9
(22) Anmeldetag: 09.03.2004
(51) Int. Cl.: E04F 15/04

(54) **Zwei-Schicht-Fertigparkett**

(30) Priorität: 29.03.2003 DE 10314318
(71) Anmelder: Parkett Herter GmbH & Co. KG, 72116 Mössingen (DE)
(72) Erfinder: Knoublauch-Mayer, Werner, Dr., 72414 Rangendingen (DE); Herter, Hans-Wilhelm, 72116 Mössingen (DE); Herter, Joachim, 72116 Mössingen (DE)
(74) Vertreter: Kohler Schmid Möbus, Patentanwälte

(57) **Zusammenfassung**

Ein 2-Schicht-Fertigparkett weist Parkettstäbe mit einer Massivholznutzschicht (2) und mit einem Träger (3) auf, welcher über seine Trägerunterseite (6) auf einem Untergrund aufgeklebt wird. Die Trägerunterseite (6) ist mit einer spannungsabbauenden Beschichtung (5) wie einem Vlies versehen.

## Beschreibung

Die Erfindung betrifft ein 2-Schicht-Fertigparkett mit einer Massivholznutzschicht und mit einem Träger, welcher über seine Trägerunterseite auf einem Untergrund aufgeklebt wird.

Parkettstäbe eines 2-Schicht-Fertigparketts sind Verlegeeinheiten, welche aus einer oberseitigen Massivholznutzschicht mit einer Dicke von ca. 0,2 bis 10 mm und einem Träger aus Sperrholz, Massivholz oder einer Holzwerkstoffplatte mit einer Dicke von ca. 2 bis 10 mm bestehen. Der Träger wird durch quer auf die Rückseite der Massivholznutzschicht aufgeklebte Lamellen gebildet. Die 2-Schicht-Fertigparkettstäbe werden üblicherweise mittels Parkettklebemasse auf den Untergrund vollflächig aufgeklebt. Lücken zwischen den Lamellen des Trägers lassen Raum für die Parkettklebemasse und dienen als Spannungsausgleich.

Durch eine Feuchtigkeitsaufnahme im Holz ergibt sich ein Aufquellen. Das Holz bewegt sich. Fugen treten auf. Auftretende Scherkräfte führen zu Belastungen des Klebers. Der Kleber nimmt mehr Kräfte auf als der Untergrund und reißt ab. Das 2-Schicht-Fertigparkett ist nicht mehr vollflächig mit dem Untergrund verbunden. Diese Probleme können insbesondere bei verlegetechnisch oder bauphysikalisch ungünstigen bzw. schwierigen Untergründen, insbesondere bei Renovierungen, auftreten.

Der Anmelder hat sich die Aufgabe gestellt, diese Probleme bei einem vollflächig zu verklebenden 2-Schicht-Fertigparkett zu verringern bzw. auszuschließen.

Diese Aufgabe wird durch ein 2-Schicht-Fertigparkett gelöst, welches einen Träger aufweist, dessen Trägerunterseite mit einer spannungsabbauenden Beschichtung wie einem Vlies versehen ist. Das Vlies ist werkseitig aufgebracht und mit dem Träger fest verbunden. Das aufkaschierte Vlies kann den Träger von dem Untergrund entkoppeln und wirkt dabei als spannungsabbauende Armierschicht und ermöglicht eine dauerhafte vollflächige Verklebung auch bei verlegetechnisch und/oder bauphysikalisch schwierigen oder ungünstigen Bedingungen mit einem handelsüblichem Parkettkleber (Dispersions-, Kunstharz-, Polyurethan- oder Pulverkleber). Die Parkettstäbe können folgende Dimensionen besitzen: 200 bis 2000 mm Länge; 20 bis 200 mm Breite; 5 bis 25 mm Stärke. Das Fertigparkett kann auf folgendem Untergrund verklebt werden: Holzwerkstoffplatte, Zementestrich, Gips-Anhydritestrich, Gussasphalt usw.. Durch die Verwendung des Vlieses wird die Fugenbildung zwischen den Parkettstäben trotzt Quellen und/oder Schwinden des Fertigparketts verhindert und ein Lösen bzw. Zerstören des Untergrundes verhindert.

Das erfindungsgemäße Vlies soll ein Flächengewicht von 100 bis 500 g/m², eine Stärke von 0,5 bis 5 mm und eine Reißfestigkeit von 1 bis 100 N/mm² aufweisen.

Ein Ausführungsbeispiel der Erfindung ist in der Zeichnung schematisch dargestellt und wird nachfolgend mit Bezug zur Figur der Zeichnung näher erläutert. Es zeigt:
- **Fig. 1**: einen Parkettstab eines 2-Schicht-Fertigparketts im Querschnitt;
- **Fig.2**: eine Ansicht der Unterseite des Parkettstabs nach Fig. 1.

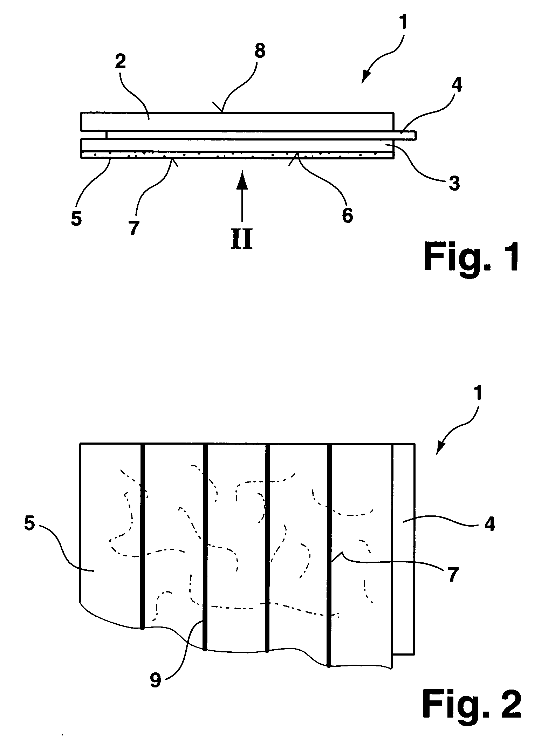

Aus der **Fig. 1** ist ersichtlich, dass ein Parkettstab **1** eines 2-Schicht-Fertigparketts eine Massivholznutzschicht **2** beispielsweise aus Eiche oder Buche und einen Träger **3**, ausgebildet durch eine Sperrholzschicht oder eine Massivholzschicht oder eine Holzwerkstoffplatte, sowie Nut-Feder-Verbindungsmittel **4** aufweist. Der Parkettstab 1 ist zur vollflächigen Verklebung mit dem Untergrund vorgesehen. Die Verbindung zum Untergrund erfolgt über ein Vlies **5**, welches auf die Trägerunterseite **6** aufkaschiert ist und über seine Vliesunterseite **7** auf einen Untergrund aufgeklebt wird. Das Vlies 5 bildet die Verbindung des Parkettstabs 1 zum Untergrund und entkoppelt den Träger 3 vom Untergrund, welcher nicht mehr direkt mit dem Untergrund verbunden wird. Quell- und Schwindeigenschaften des Fertigparketts werden behindert. Das Vlies 5 nimmt die entstehenden Scherkräfte auf. Spannungen werden in das Vlies 5 und nicht in den Kleber oder den Untergrund eingeleitet. Das Vlies 5 weist Entspannungs- oder Dehnungsfugen **9** auf. Die Vliesunterseite 7 ist auf dem Untergrund fixiert. Der Vollständigkeit halber wird die begehbare Parkettoberseite mit dem Bezugszeichen **8** bezeichnet.

Aus der **Fig. 2** ist ersichtlich, dass der Parkettstab 1 in der Regel eine rechteckige Kontur aufweist, welche eine beliebige Länge oder Breite besitzen kann.

### BEZUGSZEICHEN

- 1: Parkettstab
- 2: Massivholznutzschicht
- 3: Träger
- 4: Nut-Feder-Verbindungsmittel
- 5: Vlies
- 6: Trägerunterseite
- 7: Vliesunterseite
- 8: Parkettoberseite
- 9: Entspannungsfuge

## Patentansprüche

1. 2-Schicht-Fertigparkett mit einer Massivholznutzschicht (2) und mit einem Träger (3), welcher über seine Trägerunterseite (6) auf einem Untergrund aufgeklebt wird, **dadurch gekennzeichnet, dass** die Trägerunterseite (6) mit einer spannungsabbauenden Beschichtung (5) versehen ist.

2. 2-Schicht-Fertigparkett nach Anspruch 1, **dadurch gekennzeichnet, dass** die Beschichtung durch ein vorzugsweise aufkaschiertes Vlies (5) ausgebildet ist.

3. 2-Schicht-Fertigparkett nach Anspruch 1 oder 2, **dadurch gekennzeichnet, dass** die Massivholznutzschicht aus Hartholz (2) 0,2 bis 10 mm stark ist, und dass der Träger (3) aus Sperrholz oder aus Massivholz oder aus einer Holzwerkstoffplatte mit einer Stärke von 2 bis 10 mm hergestellt ist.

4. 2-Schicht-Fertigparkett nach einem der vorhergehenden Ansprüche, **dadurch gekennzeichnet, dass** das Vlies (5) ein Flächengewicht von 100 bis 500 g/m², eine Stärke von 0,5 bis 5 mm und eine Reißfestigkeit von 1 bis 100 N/mm² aufweist.
